# EUROPÄISCHE PATENTSCHRIFT

(11) **EP 2 590 770 B1**
(45) Veröffentlichungstag und Bekanntmachung des Hinweises auf die Patenterteilung: **07.02.2018**
(21) Anmeldenummer: 11729988.3
(22) Anmeldetag: 06.07.2011
(51) Int. Cl.: B23D 21/14

(54) **VERFAHREN ZUR HERSTELLUNG EINES ROHRES FÜR EINEN WÄRMETAUSCHER, INSBESONDERE FÜR EIN KRAFTFAHRZEUG**
METHOD FOR PRODUCING A TUBE FOR A HEAT EXCHANGER, IN PARTICULAR FOR A MOTOR VEHICLE
PROCÉDÉ DE FABRICATION D'UN TUBE POUR UN ÉCHANGEUR DE CHALEUR, EN PARTICULIER POUR UN VÉHICULE AUTOMOBILE

(30) Priorität: 06.07.2010 DE 102010026280
(43) Veröffentlichungstag der Anmeldung: 15.05.2013
(73) Patentinhaber: MAHLE Behr GmbH & Co. KG, 70469 Stuttgart (DE)
(72) Erfinder: BRUNNER, Steffen, 71554 Weissach im Tal (DE)
(74) Vertreter: Grauel, Andreas
(86) Internationale Anmeldenummer: PCT/EP2011/061376
(87) Internationale Veröffentlichungsnummer: WO 2012/004290

(56) Entgegenhaltungen:
- DE-A1- 3 136 620
- DE-A1- 19 749 281
- US-A- 2 444 465
- US-A- 4 294 011

## Beschreibung

Die Erfindung betrifft ein Verfahren zur Herstellung eines Rohres für einen Wärmetauscher, insbesondere für ein Kraftfahrzeug, bei welchem ein, an seiner Oberfläche mit Turbulenzeinlagen versehenes Langrohr in mindestens zwei einzelne Rohre vereinzelt wird. Ein Verfahren zur Herstellung von Rohrabschnitten wird vom Dokument DE 19749281A1 offenbart. Wärmetauscher mit Wärmeübertragungsrohren sind in vielen Ausführungformen und Anwendungen bekannt und werden insbesondere auch für die Motorkühlung und die Klimatisierung von Kraftfahrzeugen eingesetzt. Solche Wärmetauscher weisen einen gelöteten Block aus Rohren und Wellrippen auf, wobei in den Rohren ein Kühlmedium hindurch strömt, Das Rohr wird von außen von einem zu kühlendem Medium, beispielsweise dem Abgas eines Verbrennungsmotors, umspült, Das Rohr weist dabei tiefgezogene Prägungen, sogenannte Winglets auf, mittels welchen die laminare Strömung des zu kühlenden Mediums in eine turbulente Strömung umgewandelt wird.

Diese Rohre werden normalerweise aus Langrohren hergestellt, welche mit Hilfe einer Präzisionskreissäge in einzelne Rohre getrennt werden. Bei diesem Vorgang bildet sich allerdings eine hohe Anzahl kleiner unerwünschter Schmutzrückstände bzw. diesbezügliche kleinste Partikel, da es sich bei der Anwendung des Sägeverfahrens um ein spanendes Trennverfahren mit einer hohen Schnittgeschwindigkeit handelt. Ein solches spanendes Trennverfahren erfordert eine aufwändige anschließende Reinigung der einzelnen Rohre. Weiterhin ist ein zusätzliche Prozess in Form des Bürstentgratens notwendig, bei welchem Grate und Sägeflitter an den Schnittstellen des Rohres entfernt und saubere Schnittflächen erzeugt werden. Durch diese zusätzlichen Reinigungsprozesse erhöhen sich die Kosten sowie der Zeitaufwand für die Herstellung des Rohres.

Der Erfindung liegt somit die Aufgabe zu Grund, ein Verfahren zur Herstellung eines Rohres für einen Wärmetauscher, insbesondere für ein Kraftfahrzeug anzugeben, welches kostengünstig ist und die Herstellung im Wesentlichen sauberer Schnittflächen an den Rändern der Rohre ohne eine oder mit nur geringer Nachbearbeitung der Rohre ermöglicht.

Erfingdungsgemäß wird die Aufgabe durch ein Verfahren gemäß Anspruch 1 dadurch gelöst, dass durch mindestens eine Öffnung des Langrohres ein erster Teil einer mindestens zweiteiligen Schneidvorrichtung in das Innere des Langrohres eingeführt wird und der zweite Teil der Schneidvorrichtung an der Außenseite des Langrohres annähernd gegenüber liegend zum innen liegenden ersten Teil der Schneideinrichtung angelegt wird und der erste und der zweite Teil der Schneideinrichtung zur Vereinzelung des Langrohres gegen einander gepresst werden. Dies hat den Vorteil, dass eine zumindest nahezu spanlose bzw. spanarme Herstellung des Rohres erfolgt. Aufgrund dieser nahezu spanlosen Herstellung kann weitestgehend auf ein Säubern von Rückständen des Rohres verzichtet werden oder der diesbezügliche Aufwand kann reduziert werden, da kaum oder keine Späne und Flitter bei diesem Herstellungs- bzw. Trennverfahren auftreten. Des Weiteren kann ggf. auch der zusätzliche Prozess des Bürstentgratens entfallen, Durch diese Art der Herstellung des Rohres für einen Wärmetauscher werden nicht nur die Kosten für die Trennung der Rohre reduziert, sondern auch der Zeitaufwand für deren Herstellung in der Produktion, da auf eine Nachbearbeitung der Rohre verzichtet werden kann.

Vorteilhafterweise wird in die Längserstreckung eines Metallbandes in vorgegebenen Abständen die mindestens eine Öffnung eingearbeitet und anschließend das Metallband zu dem Langrohr verformt. Da das Metallband einfach zu handhaben ist, lassen sich die erforderlichen Öffnungen in einem automatischen Prozess in das Metallband einarbeiten. Die Öffnungen werden genau an den Stellen in das Metallband eingearbeitet, wo später das Langrohr in einzelne Rohre getrennt werden soll, Die Öffnungen lassen sich dabei vorzugsweise in besonders einfacher Art und Weise aus dem Metallband ausstanzen. Erst anschließend wird das Metallband zu dem Langrohr umgeformt.

In einer Ausgestaltung werden in das Metallband jeweils mindestens zwei in der Quererstreckung des Metallbandes neben einander liegende Öffnungen eingearbeitet, wobei das Metallband so zum Langrohr mit einem insbesondere rechteckigem Querschnitt geformt wird, dass sich die mindestens zwei Öffnungen am Langrohr beabstandet gegenüber liegen. Auf dem Metallband können durch ein gesteuertes Werkzeug zunächst die Öffnungen in der jeweils richtigen Position in vorgegebenen Abständen entlang der Längserstreckung des Metallbandes eingebracht werden. Je nach gewünschter Ausführungsform ist die Position der Öffnungen längenvariabel, was durch das gesteuerte Werkzeug einfach realisiert werden kann.

In einer Weiterbildung werden die Öffnungen schlitzähnlich ausgebildet, wobei die Längsausdehnung der schlitzähnlichen Öffnungen annähernd senkrecht zur Längserstreckung der Langrohre erfolgt und die schlitzähnlichen Öffnungen durch Stege mit einander verbunden werden. Insbesondere im Bereich der Stege kann somit das Langrohr besonders einfach zu einzelnen Rohren geformt werden.

In einer Variante besteht die mindestens zweiteilige Schneideinrichtung aus einer Schnittvorrichtung und einer Matrize, wobei entweder die Schnittvorrichtung als erster Teil der Schneideinrichtung durch zwei gegenüber liegende Öffnungen des Langrohres in dessen Inneres eingeführt und gehalten wird und die Matrize als zweites Teil der Schneideinrichtung an der Außenseite des Langrohres an dieses angelegt wird, oder die Matrize als erstes Teil der Schneideinrichtung durch die zwei gegenüber liegenden Öffnungen des Langrohres in dessen Inneres eingeführt und gehalten wird und die Schnittvorrichtung an der Außenseite des Langrohres an dieses angelegt wird. Je nach Positionierung der Schnittvorrichtung oder der Matrize kann das Langrohr von innen nach außen oder von außen nach innen durchtrennt werden.

In einer anderen Ausführungsform weist die Schnittvorrichtung mindestens zwei, der Querschnittgeometrie des Langrohres angepasste Schnittflächen auf, wobei zunächst eine Schnittfläche zur Vereinzelung eines Teiles des Langrohres gegen die Matrize gedrückt wird und anschließend die andere Schnittfläche zur Vereinzelung des verbleibenden Teiles des Langrohres gegen die Matrize gedrückt wird, wodurch das einzelne Rohr von dem Langrohr abgetrennt wird. Durch diese Vorgehensweise kann das Rohr vollautomatisch getrennt werden, wobei sich dieser Prozess günstig in die Taktzeiten bei der Herstellung des Rohres einfügen lässt.

In einer Variante ist während des Einführens der Schnittvorrichtung in das Innere des Langrohres und der Positionierung der Schnittvorrichtung zur Querschnittgeometrie des Langrohres die Matrize geöffnet, welche vor Ausführung des Schnittvorganges geschlossen wird. Somit ist ausreichend Spiel vorhanden, dass die Schnittvorrichtung exakt innerhalb des Langrohres positioniert werden kann.

Insbesondere umfasst die Matrize im geschlossenen Zustand das Langrohr in seinem Umfang annähernd vollständig. Damit ist eine besonders sichere Positionierung des Langrohres gegeben, dessen Verrutschen während des Schnittvorganges sicher unterbunden wird, wodurch eine saubere Schnittfläche an dem Rohr gewährleistet wird.

Vorteilhafterweise wird die Schnittvorrichtung innerhalb der zwei gegenüber liegenden Öffnungen senkrecht zur Längsrichtung des Langrohres beweglich gehalten, wobei die Schnittvorrichtung in dem ersten Schnittvorgang in eine erste Richtung bewegt wird und in dem zweiten Schnittvorgang in die entgegen gesetzte zweite Richtung bewegt wird. Da das Langrohr durch die Matrize fest positioniert ist, kann durch die Bewegung der Schnittvorrichtung ein sauberer Schnitt für die Vereinzelung der Rohre ausgeführt werden.

Insbesondere wird nach Abschluss des ersten und des zweiten Schnittvorganges die Matrize geöffnet. Dabei kann die Schnittvorrichtung aus dem Langrohr herausgefahren werden.

Die Erfindung lässt zahlreiche Ausführungsformen zu. Eine davon soll anhand der in der Zeichnung dargestellten Figuren näher erläutert werden.

Es zeigt:
- Figur 1:: Metallband mit Turbulenzeinlagen,
- Figur 2:: gebogenes Rohr,
- Figur 3:: Arbeitsschritte bei der Vereinzelung eines Rohres.

Gleiche Merkmale sind mit gleichen Bezugszeichen gekennzeichnet.

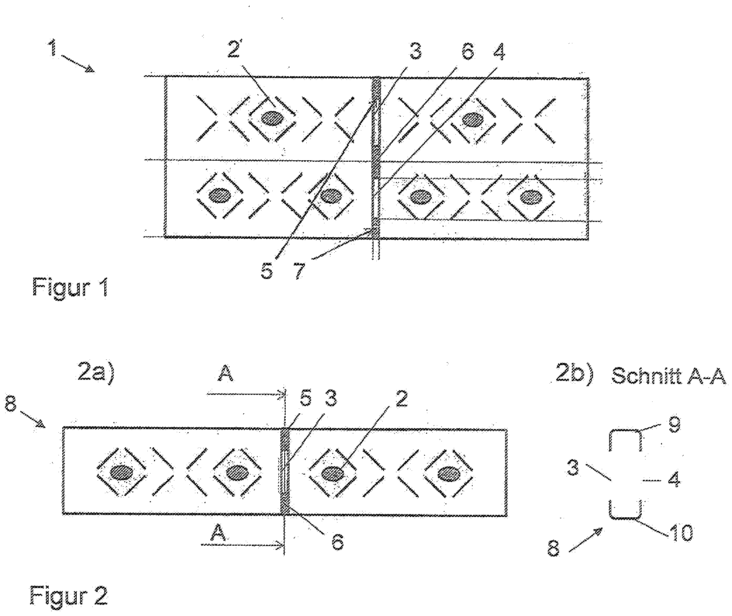

In Figur 1 ist ein Metallband 1 in Form eines Streifens von beispielsweise 36 mm Breite dargestellt. In einem ersten Verfahrensschritt werden in dem Metallband 1 in gleichmäßigen Abständen Turbulenzeinlagen 2, sogenannte Winglets, erzeugt. Die Turbulenzeinlagen 2 werden dabei tiefgezogen, indem sie durch ein Verbundwerkzeug eingeprägt werden. Nach Einstellung der Turbulenzeinlagen 2 werden in beliebigen, vorher festgelegten Abschnitten schlitzähnlichen Öffnungen 3 und 4 in das Metallband 1 eingestanzt. Diese schlitzähnlichen Öffnungen 3 und 4, welche eine Breite von maximal 2 mm aufweisen, erstrecken sich dabei quer zur Längserstreckung des Metallbandes 1 und sind durch Stege 5, 6 und 7 mit einander verbunden.

Nach dem Rausstanzen der schlitzähnlichen Öffnungen 3 und 4 wird das Metallband 1 in seiner Längserstreckung gebogen und verschweißt, so dass sich das Langrohr 8 ergibt. Die in dem Metallband 1 eingebrachten schlitzähnlichen Öffnungen 3 und 4 sind jetzt in dem Langrohr 8 so positioniert, dass sich die schlitzähnlichen Öffnungen 3, 4 direkt gegenüber liegen, wobei der Rohrinnenraum die schlitzähnlichen Öffnungen 3 und 4 beabstandet, Das so geformte Langrohr 8 ist in Figur 2 dargestellt. Figur 2b zeigt dabei einen Schnitt durch das geformte Langrohr 8 entlang der Linie A-A. Das Langrohr 8 weist einen rechteckförmigen Querschnitt auf, weshalb es auch üblicherweise als Flachrohr bezeichnet wird.

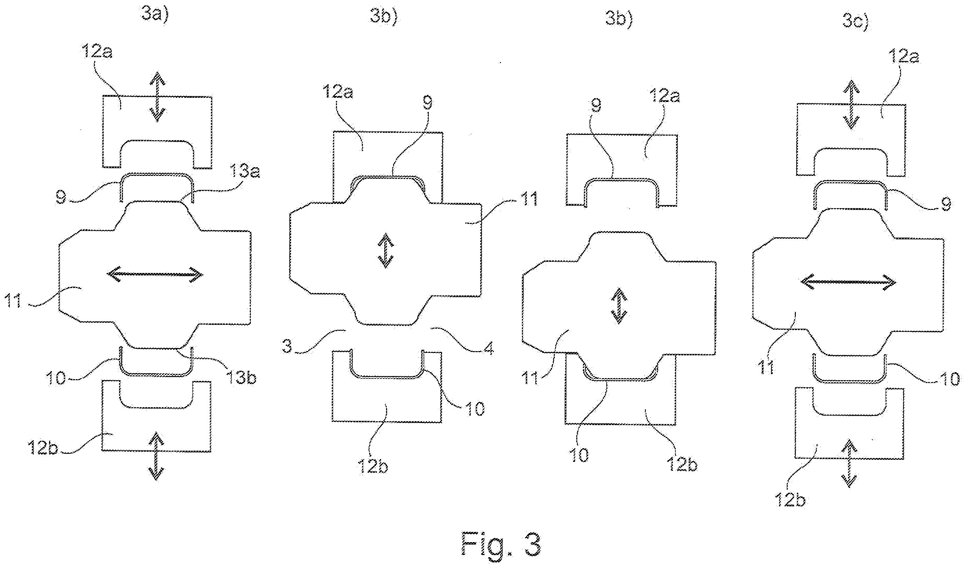

Das so fertig geformte Landrohr 8 soll nun vereinzelt werden. Die Schnittfolge der Vereinzelung ist in Figur 3 dargestellt. Diese Darstellung umfasst ebenfalls den Schnitt A-A, welcher bereits in der Figur 2b betrachtet wurde. Zur Vereinzelung des Langrohres 8 in einzelne Rohre wird eine Schneideinrichtung 11, 12 benötigt, welche zweiteilig ausgebildet ist und aus einer Schnitteinnchtung 11 und einer Matrize 12a, b besteht, wobei sich die Matrize 12a, b in einen oberen Teil 12a und einen unteren Teil 12b unterteilt.
In einem ersten Schritt wird die Schnittvorrichtung 11 durch die schlitzähnlichen Öffnungen 3 und 4 in das Innere des Langrohres 8 eingefahren. Die Schnittvorrichtung 11 ist dabei als sehr flacher Schnittstempel ausgebildet, welcher annähernd eine Dicke von 1 mm aufweist. Innerhalb des Langrohres 8 wird die Schnittvorrichtung 11 gegenüber dem Oberteil 9 bzw. dem Unterteil 10 des Langrohres 8, welche durch die Längsschlitze 3, 4 getrennt sind, positioniert und exakt eingestellt. Bei diesem Verfahrensschritt ist die Matrize 12a, 12b geöffnet.

In einem weiteren Schritt wird die Matrize 12a bzw. 12b nun geschlossen, wie in Figur 3b dargestellt. Das bedeutet, dass das Matrizenteil 12a das Oberteil 9 des Langrohres 8 fest umschließt, während das Matrizenteil 12b das Unterteil 10 des Langrohres 8 fest umfasst. Wie aus der Figur 3b ersichtlich, weist die Schnittvorrichtung 11 zwei Schnittflächen 13a und 13b auf. Die Schnittflächen 13a ist dabei gegen den oberen Teil 9 des Langrohes 8 gerichtet, während die Schnittfläche 13b auf den Unterteil 10 des Langrohres 8 zeigt. Die Schnittvorrichtung 11 wird zunächst gegen das Oberteil 9 des Langrohres 8 gepresst, wobei die Matrize 12a das Langrohr 8 in seiner Position arretiert, so dass der Schnittvorgang ohne weitere Probleme ausgeführt werden kann. Nachdem der Schnitt am oberen Teil 9 des Langrohres 8 erfolgt ist, verfährt die Schnittvorrichtung 11 in die entgegengesetzte Richtung und schneidet den unteren Teil 10 des Langloches 8, welcher von dem Matrizenteil 12b gehalten wird, Die schlitzahnlichen Öffnungen 3 und 4 sind in ihrer Erstreckung so ausgebildet, dass sich die Schnittvorrichtung 11 ohne Probleme in diese beiden Richtungen bewegen kann.

Durch diese, beidseitig in den schlitzähnlichen Öffnungen 3, 4 gelagerte Schnittvorrichtung 11 wird das Langrohr 8 zunächst in dereinen und dann in der anderen Richtung getrennt, wobei das Oberteil 9 und das Unterteil 10 des Langrohres 8 an der Position getrennt werden, wo sich die schlitzähnlichen Öffnungen 3, 4 erstrecken. Nachdem der Schnittvorgang abgeschlossen ist, wird die Matrize 12a, 12b geöffnet und die Schnittvorrichtung 11 aus dem Langrohr 8 heraus gefahren.

Durch diese Vorgehensweise werden bei der Herstellung eines Rohres für einen Wärmetauscher die Herstellungskosten reduziert und eine besondere Sauberkeit der Schnittstellen gewährleistet, da es sich bei dem beschriebenen Verfahren um ein spanloses Verfahren handelt. Zusätzliche Arbeitsschritte, wie das Waschen der Rohre oder ein aufwendiges Bürstentgraten, welche bei einem spanenden Trennverfahren notwendig werden, können bei der vorgeschlagenen Lösung entfallen. Nach Optimierung der Taktzeit kann die beschriebene Herstellung des Rohres in einen automatischen Herstellungsprozess eingebettet werden.

## Patentansprüche

1. Verfahren zur Herstellung eines Rohres für einen Wärmetauscher, insbesondere für ein Kraftfahrzeug, bei welchem ein an seiner Oberfläche mit Turbulenzeinlagen (2) versehendes Langrohr in mindestens zwei einzelne Rohre vereinzelt wird, **dadurch gekennzeichnet, dass** in einem ersten Verfahrensschritt in ein Metallband in gleichmäßigen Abständen Turbulenzeinlagen erzeugt werden, und durch mindestens eine Öffnung (3, 4) des Langrohres (8) ein erster Teil (11) einer mindestens zweiteiligen Schneideinrichtung (11, 12) in das Innere des Langrohres (8) eingeführt wird und der zweite Teil (12) der Schneideinrichtung (11, 12) an der Außenseite des Langrohres (8) annähernd gegenüber liegend zum innen liegenden ersten Teil (11) der Schneideinrichtung (11, 12) angelegt wird und der erste (11) und der zweite Teil (12) der Schneideinrichtung (11, 12) zur Vereinzelung des Langrohres (8) gegen einander gepresst werden, wobei in die Längserstreckung eines Metallbandes (1) in vorgegebenen Abständen die mindestens eine Öffnung (3, 4) eingearbeitet wird und anschließend das Metallband (1) zu dem Langrohr (8) verformt wird.

2. Verfahren nach Anspruch 1, **dadurch gekennzeichnet, dass** in das Metallband (1) jeweils mindestens zwei in der Quererstreckung des Metallbandes (1) neben einander liegende Öffnungen (3, 4) eingearbeitet werden, wobei das Metallband (1) so zum Langrohr (8) mit einem insbesondere rechteckigen Querschnitt geformt wird, dass sich die mindestens zwei Öffnungen (3, 4) am Langrohr (8) beabstandet gegenüber liegen.

3. Verfahren nach Anspruch 2, **dadurch gekennzeichnet, dass** die Öffnungen (3, 4) schlitzähnlich ausgebildet werden, wobei die Längsausdehnung der schlitzähnlichen Öffnungen (3,4) annähernd senkrecht zur Längserstreckung des Langrohres (8) erfolgt und die schlitzähnlichen Öffnungen (3,4) durch Stege (5, 6, 7) mit einander verbunden werden.

4. Verfahren nach einem der Ansprüche 2 bis 3 **dadurch gekennzeichnet, dass** die mindestens zweiteilige Schneideinrichtung (11, 12) aus einer Schnittvorrichtung (11) und einer Matrize (12a, 12b) besteht, wobei entweder die Schnittvorrichtung (11) als erster Teil der Schneideinrichtung (11, 12) durch zwei gegenüber liegende Öffnungen (3,4) des Langrohres (8) in dessen Inneres eingeführt und gehalten wird und die Matrize (12a, 12b) als zweites Teil der Schneideinrichtung (11, 12) an der Außenseite des Langrohres (8) an dieses angelegt wird oder die Matrize (12a, 12b) als erstes Teil der Schneideinrichtung (11, 12) durch die zwei gegenüber liegenden Öffnungen (3, 4) des Langrohres (8) in dessen Inneres eingeführt und gehalten wird und die Schnittvorrichtung (11) an der Außenseite des Langrohres (8) an dieses angelegt wird.

5. Verfahren nach Anspruch 4, **dadurch gekennzeichnet, dass** die Schnittvorrichtung (11) mindestens zwei, der Querschnittgeometrie des Langrohres (8) angepasste Schnittflächen (13a, 13b) aufweist, wobei zunächst eine Schnittfläche (13a) zur Vereinzelung eines Teils (9) des Langrohres (8) gegen die Matrize (12a) gedrückt wird und anschließend die andere Schnittfläche (13b) zur Vereinzelung des verbleibenden Teiles (10) des Langrohres (8) gegen die Matrize (12b) gedrückt wird, wodurch das einzelne Rohr von dem Langrohr (8) abgetrennt wird.

6. Verfahren nach Anspruch 4 oder 5, **dadurch gekennzeichnet, dass** die während des Einführens der Schnittvorrichtung (11) in das Innere des Langrohres (8) und der Positionierung der Schnittvorrichtung (11) zur Querschnittgeometrie des Langrohres (8) die Matrize (12a, 12b) geöffnet ist, welche vor Ausführung des Schnittvorganges geschlossen wird.

7. Verfahren nach Anspruch 6, **dadurch gekennzeichnet, dass** die Matrize (12a, 12b) im geschlossenen Zustand das Langrohr (8) in seinem Umfang annähernd vollständig umfasst.

8. Verfahren nach Anspruch 5 oder 6, **dadurch gekennzeichnet, dass** die Schnittvorrichtung (11) innerhalb der zwei gegenüber liegenden Öffnungen (3, 4) senkrecht zur Längsersteckung des Langrohres (8) beweglich gehalten wird, wobei die Schnittvorrichtung (11) in dem ersten Schnittvorgang in eine erste Richtung bewegt wird und in dem zweiten Schnittvorgang in die entgegen gesetzte zweite Richtung bewegt wird.

9. Verfahren nach Anspruch 8, **dadurch gekennzeichnet, dass** nach Abschluss des ersten und des zweiten Schnittvorganges die Matrize (12a; 12b) geöffnet wird.

## Claims

1. A method for producing a tube for a heat exchanger, in particular for a motor vehicle, where a long tube, which is provided on the surface thereof with turbulence inserts (2), is separated into at least two individual tubes, **characterised in that** in a first process step, turbulence inserts are created in a metal band at regular spacings, and a first part (11) of an at least two-part cutting device (11, 12) is introduced into the interior of the long tube (8) through at least one opening (3, 4) of the long tube (8) and the second part (12) of the cutting device (11, 12) is placed on the outside of the long tube (8) approximately opposite the first part (11) of the cutting device (11, 12) which is inside, and the first part (11) and the second part (12) of the cutting device (11, 12) are pressed against each other for separating the long tube (8), wherein the at least one opening (3, 4) is provided in the longitudinal extension of a metal band (1) at predetermined spacings and the metal band (1) is then deformed to form the long tube (8).

2. The method as claimed in claim 1, **characterised in that** in each case at least two openings (3, 4), which are located side by side in the cross extension of the metal band (1), are provided in the metal band (1), wherein the metal band (1) is formed into the long tube (8) with an, in particular, rectangular cross section in such a manner that the at least two openings (3, 4) are located opposite each other at a spacing on the long tube (8).

3. The method as claimed in claim 2, **characterised in that** the openings (3, 4) are realised in a slot-like manner, wherein the longitudinal extension of the slot-like openings (3, 4) is effected approximately at right angles with respect to the longitudinal extension of the long tube (8) and the slot-like openings (3, 4) are connected together by webs (5, 6, 7).

4. The method as claimed in one of the preceding claims 2 to 3, **characterised in that** the at least two-part cutting device (11, 12) consists of a cutting apparatus (11) and a die (12a, 12b), wherein either the cutting apparatus (11) as the first part of the cutting device (11, 12) is introduced through two opposite openings (3, 4) of the long tube (8) into the interior of same and is held there and the die (12a, 12b) as the second part of the cutting device (11, 12) on the outside of the long tube (8) is placed onto said long tube, or the die (12a, 12b) as the first part of the cutting device (11, 12) is introduced through the two opposite openings (3, 4) of the long tube (8) into the interior of same and is held there and the cutting apparatus (11) on the outside of the long tube (8) is placed onto said long tube.

5. The method as claimed in claim 4, **characterised in that** the cutting apparatus (11) has at least two cutting faces (13a, 13b) which are adapted to the cross sectional geometry of the long tube (8), wherein initially one cutting face (13a) is pressed against the die (12a) for separating a part (9) of the long tube (8) and then the other cutting face (13b) is pressed against the die (12b) for separating the remaining part (10) of the long tube (8), as a result of which the individual tube is separated from the long tube (8).

6. The method as claimed in claim 4 or 5, **characterised in that** during the insertion of the cutting apparatus (11) into the interior of the long tube (8) and the positioning of the cutting apparatus (11) with respect to the cross sectional geometry of the long tube (8), the die (12a, 12b) is open, said die being closed prior to the execution of the cutting operation.

7. The method as claimed in claim 6, **characterised in that** in the closed state, the die (12a, 12b) encompasses the long tube (8) approximately completely within its extent.

8. The method as claimed in claim 5 or 6, **characterised in that** the cutting apparatus (11) is held within the two opposite openings (3, 4) so as to be movable vertically with respect to the longitudinal extension of the long tube (8), wherein the cutting apparatus (11) is moved in a first direction in the first cutting operation and is moved in the opposite second direction in the second cutting operation.

9. The method as claimed in claim 8, **characterised in that** the die (12a; 12b) is opened once the first and the second cutting operations have been terminated.

## Revendications

1. Procédé de fabrication d'un tube, en particulier pour un véhicule automobile, procédé au cours duquel un tube long se présentant en comportant sur sa surface des éléments intercalaires générant des turbulences (2) est séparé en au moins deux tubes individuels, **caractérisé en ce que** des éléments intercalaires générant des turbulences sont produits, au cours d'une première étape de procédé, en étant placés à intervalles réguliers dans une bande métallique, et une première partie (11) d'un ensemble pour la découpe (11, 12), comportant au moins deux parties, est introduite à l'intérieur du tube long (8), en traversant au moins une ouverture (3, 4) du tube long (8), et la deuxième partie (12) de l'ensemble pour la découpe (11, 12) est appliquée sur le côté extérieur du tube long (8) se situant presque à l'opposé de la première partie (11) de l'ensemble pour la découpe (11, 12), se situant à l'intérieur, et la première (11) et la deuxième partie (12) de l'ensemble pour la découpe (11, 12) servant à la séparation du tube long (8) sont comprimées l'une contre l'autre, où l'ouverture (3, 4) au moins au nombre de un est usinée à des intervalles prédéfinis, en suivant l'étendue longitudinale d'une bande métallique (1) et, ensuite, la bande métallique (1) est façonnée pour former le tube long (8).

2. Procédé selon la revendication 1, **caractérisé en ce que**, dans la bande métallique (1), au moins deux ouvertures (3, 4) sont usinées à chaque fois en étant placées l'une à côté de l'autre en suivant l'étendue transversale de la bande métallique (1), où la bande métallique (1) est façonnée pour former le tube long (8), ledit tube ayant une section en partie rectangulaire, façonnage réalisé de manière telle que les ouvertures (3, 4) au moins au nombre de deux soient placées en étant espacées l'une de l'autre sur le tube long (8).

3. Procédé selon la revendication 2, **caractérisé en ce que** les ouvertures (3, 4) sont configurées comme des fentes, où le profil longitudinal des ouvertures (3, 4) semblables à des fentes est presque perpendiculaire à l'étendue longitudinale du tube long (8), et les ouvertures (3, 4) semblables à des fentes sont reliées l'une à l'autre par des barrettes (5, 6, 7).

4. Procédé selon l'une des revendications 2 à 3, **caractérisé en ce que** l'ensemble pour la découpe (11, 12), conçu en au moins deux parties, se compose d'un dispositif de coupe (11) et d'une matrice (12a, 12b), où soit le dispositif de coupe (11), en tant que première partie de l'ensemble pour la découpe (11, 12), est introduit et maintenu à l'intérieur du tube long, à travers deux ouvertures (3, 4) du tube long (8), placées en se faisant face l'une l'autre, et la matrice (12a, 12b), en tant que deuxième partie de l'ensemble pour la découpe (11, 12), est appliquée sur ce tube long, sur le côté extérieur dudit tube long (8), soit la matrice (12a, 12b), en tant que première partie de l'ensemble pour la découpe (11, 12), est introduite et maintenue à l'intérieur du tube long, à travers deux ouvertures (3, 4) du tube long (8), placées en se faisant face l'une l'autre, et le dispositif de coupe (11) est appliqué sur ce tube long, sur le côté extérieur dudit tube long (8).

5. Procédé selon la revendication 4, **caractérisé en ce que** le dispositif de coupe (11) présente au moins deux surfaces de coupe (13a, 13b) adaptées à la géométrie de la section du tube long (8), où d'abord une surface de coupe (13a) servant à la séparation d'une partie (9) du tube long (8) est pressée contre la matrice (12a) et, ensuite, l'autre surface de coupe (13b) servant à la séparation de la partie résiduelle (10) du tube long (8) est pressée contre la matrice (12b), faisant que le tube individuel est séparé du tube long (8).

6. Procédé selon la revendication 4 ou 5, **caractérisé en ce que**, au cours de l'introduction du dispositif de coupe (11), à l'intérieur du tube long (8), et au cours du positionnement du dispositif de coupe (11) par rapport à la géométrie de la section du tube long (8), la matrice (12a, 12b) est ouverte, laquelle matrice est fermée avant l'exécution du processus de coupe.

7. Procédé selon la revendication 6, **caractérisé en ce que** la matrice (12a, 12b), quand elle est fermée, comprend le tube long (8), presque dans la totalité de sa circonférence.

8. Procédé selon la revendication 5 ou 6, **caractérisé en ce que** le dispositif de coupe (11), à l'intérieur des deux ouvertures (3, 4) se faisant face l'une l'autre, est maintenu mobile perpendiculairement à l'étendue longitudinale du tube long (8), où le dispositif de coupe (11), au cours du premier processus de coupe, est déplacé dans une première direction et, au cours du deuxième processus de coupe, est déplacé dans une seconde direction de sens opposé.

9. Procédé selon la revendication 8, **caractérisé en ce que** la matrice (12a ; 12b) est ouverte après achèvement du premier et du deuxième processus de coupe.
